(19) Europäisches Patentamt
European Patent Office
Office européen des brevets

(11) **EP 4 132 834 B1**

(12) **EUROPEAN PATENT SPECIFICATION**

(45) Date of publication and mention
of the grant of the patent:
**13.09.2023  Bulletin 2023/37**

(21) Application number: **21758810.2**

(22) Date of filing: **16.07.2021**

(51) International Patent Classification (IPC):
**B61H 9/02** *(2006.01)*      **B66B 5/04** *(2006.01)*
**B60R 22/38** *(2006.01)*

(52) Cooperative Patent Classification (CPC):
**B61H 9/02;** B66B 5/044; F16D 2127/002

(86) International application number:
**PCT/SE2021/050734**

(87) International publication number:
**WO 2022/015233 (20.01.2022 Gazette 2022/03)**

(54) **ACTUATOR ACTIVATED BY TRANSVERSAL ACCELERATION**

AKTUATOR DURCH QUERBESCHLEUNIGUNG AKTIVIERT

ACTIONNEUR ACTIONNÉ PAR ACCÉLÉRATION TRANSVERSALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.07.2020   SE 2050909**

(43) Date of publication of application:
**15.02.2023   Bulletin 2023/07**

(73) Proprietor: **Brillianze Sweden AB**
**233 51 Svedala (SE)**

(72) Inventors:
• **ZANDER, Patrik**
**271 96 Ystad (SE)**
• **ZANDER, Sten-Thore**
**deceased (SE)**

(74) Representative: **Ström & Gulliksson AB**
**P.O. Box 793**
**220 07 Lund (SE)**

(56) References cited:
EP-A2- 1 717 115      WO-A1-97/08473
GB-A- 2 309 883       US-A- 3 929 300
US-A- 4 030 682

**Description**

**TECHNICAL FIELD**

The present invention relates to an acceleration activated actuator and more particularly to an acceleration activated actuator activated by transversal acceleration arising from rotational acceleration of a rotatable object.

**BACKGROUND**

The rotation of a body may be described using numerous parameters and a commonly used parameter is the angular velocity. The rotation will give rise to a centrifugal force that is dependent on the angular velocity of the rotating body. The centrifugal force is a phenomena that is commonly utilized when engineering e.g. brakes or clutches. These devices are commonplace but have at least one inherent flaw. Devices actuated by the centrifugal force will typically activate when the rotation of the body exceeds a certain angular velocity. This is useful in some applications, but many applications require devices that activate by angular acceleration rather than velocity. These devices will activate already in response to changes in angular velocity and are preferably independent of the angular velocity.

One such device is disclosed in WO 2017140734 in the form of a rotational friction brake regulated by the rate of change of the angular speed. The rotational friction brake comprises a first body and a second body rotationally attached to the first body.

In WO 97/08473 a speed governor activated primarily by centrifugal forces is presented. The speed governor comprises a rotor and, mounted at opposite ends of the rotor are a pair of brake shoes. The brake shoes are mounted around respective pivot points to allow for pivotal motion relative to the rotor. Centrifugal force experienced by each brake-shoe during rotation of the rotor serves to urge each brake-shoe in a direction of an cylindrical inner side wall surface of a housing in which the rotor is mounted.

One shortcoming of the prior art is that it may be sensitive to design variations. Even comparably minor spread in tolerances may e.g. lead to changes in activation level and introduce imbalance in the rotating bodies.

From the above it is understood that there is room for improvements.

**SUMMARY**

An object of the present invention is to provide a new type of activator for activation by acceleration which is improved over prior art and which eliminates or at least mitigates the drawbacks discussed above. More specifically, an object of the invention is to provide an actuator that is activated by transversal force arising from angular acceleration. These objects are achieved by the technique set forth in the appended independent claims with preferred embodiments defined in the dependent claims related thereto.

In a first aspect, an actuator primarily activated by transversal acceleration arising from rotational acceleration of a rotatable object is presented. The object is rotatable in a plane of rotation about an object pivot point in the plane of rotation. The actuator comprises at least two bodies adapted to be rotatably, in or parallel to the plane of rotation, coupled to the object at a body pivot point of each body. The body pivot point and/or the body is arranged such that a mass distribution of the body is nonuniform about the body pivot point. The actuator further comprises at least one coupling arrangement arranged to operatively couple at least two of said at least two bodies. Due to said nonuniform mass distribution about the body pivot point, the actuator is configured to transition to an activated state, in response to rotational acceleration of the object, by said at least two bodies rotating about their respective body pivot points in a direction opposite to a direction of said rotational acceleration of the object.

In one embodiment of the actuator, the at least two bodies operatively coupled by means of the coupling arrangement are arranged such that the nonuniform mass distribution about their respective pivot points cause rotational movement in the plane of rotation, with respect to said at least two bodies operatively coupled by means of the coupling arrangement, opposite directions about their respective pivot point when the object is subjected to a force, directed in or parallel to the plane of rotation, which does not cause rotational acceleration of the object. This is beneficial since it enables a design that is less sensitive to vibrations and allows for a more even distribution of the mass across the object.

In another embodiment of the actuator, said at least two bodies operatively coupled by means of said at least one coupling arrangement and said at least one coupling arrangement, are arranged to disable rotational movement about each pivot points of said operatively coupled bodies arising from one or more forces, directed in or parallel to the plane of rotation, which does not cause rotational acceleration of the object. This is beneficial since it makes the actuator less sensitive to the influence of external forces such as gravitational forces. This is especially beneficial at comparably low rotational speeds of the object at which a centrifugal force acting upon the actuator may be lower than the gravitational force.

In a further embodiment of the actuator, it comprises one coupling arrangement arranged to couple two of said at least two bodies together. Having two bodies coupled together is beneficial since it enables a light weight and cost effective design.

In yet another embodiment of the actuator, it further comprises at least one coupling mechanism. The actuator is further configured to, when transitioning to the activated state, engage at least one of said at least one coupling mechanisms. The coupling mechanisms enables numerous actions to be performed when the actuator is activated.

In one additional embodiment of the actuator, at least one of said at least one coupling mechanisms is configured to engage directly or indirectly with the object such that a current rotational speed of the object is changed. When an acceleration of the object exceeding the first threshold it may be beneficial to reduce the rotational speed of the object. This is beneficial both if the acceleration is positive and negative since additional braking force may be applied by means of the coupling mechanism.

In an even further embodiment of the actuator, at least one of said at least one coupling mechanisms is a friction brake. Friction brakes are comparably cost effective to design.

In one embodiment of the actuator, at least one of said at least one coupling mechanisms is a clutch. Having the coupling mechanism acting as a clutch is beneficial since it enables e.g. the removal or addition of drive to the object or any other suitable body.

In this embodiment of the actuator, at least one of said at least one coupling mechanisms is an electronic coupling mechanism. This is beneficial since the mechanical actuator may be used to integrate with and control any suitable electronics.

In yet another embodiment of the actuator, at least one of said at least one coupling mechanisms comprises an external interface for activating the actuator and/or for controlling devices external to the actuator. The external interface enables the connection of the actuator to any suitable external device such as another actuator.

In one embodiment of the actuator, it is configured to delay the engagement of at least one of said at least one coupling mechanisms by a hold off time. The hold off time is determined by the amount by which the transversal acceleration exceeds a first threshold for activation of the actuator and the distance the body has to travel before said at least one of said at least one coupling mechanisms is activated. This is beneficial since it allows the removal or reduction of unwanted activation of the actuator, i.e. it allows configuration of sensitivity to angular jerk and suppression of unwanted activations.

In a further embodiment of the actuator, it comprises at least one return biasing arrangement arranged to transition the actuator from the activated state when the rotational acceleration of the object is below a predefined or configurable second threshold. This is beneficial since it allows the actuator to transition in and out of its activated state in a controlled manner.

In an even further embodiment of the actuator of claim, at least one return biasing arrangement comprises at least one biasing member arranged to return the actuator from the activated state by acting upon at least one of said operatively coupled bodies and/or said at least one coupling arrangement. This is beneficial since it allows the actuator to transition in and out of its activated state in a controlled manner.

In this embodiment of the actuator, the predefined or configurable first threshold and the predefined or configurable second threshold are determined in part by the configuration of said at least one return biasing arrangement. This is beneficial since it allows the actuator to transition in and out of its activated state in a controlled manner.

In one embodiment of the actuator, the operative coupling of said at least two bodies by means of the coupling arrangement is by means of a mechanical coupling. The mechanical coupling is reliable and allows for great design flexibility.

In a further embodiment of the actuator, the mechanical coupling comprises one or more transmission members and/or one or more coupling members. This mechanical coupling is reliable and allows for great design flexibility.

## BRIEF DESCRIPTION OF THE DRAWINGS

Embodiments of the invention will be described in the following; references being made to the appended diagrammatical drawings which illustrate non-limiting examples of how the inventive concept can be reduced into practice.

Fig. 1 is a schematic view of a rotatable object.

Figs. 2a-c are conceptual views of Euler bodies according to some embodiments of the invention.

Fig. 3 is a block diagram of an actuator according to some embodiments of the invention.

Figs. 4a-b are schematic views of an actuator at different states according to some embodiments of the invention.

Fig. 5 is a graph of transversal acceleration over time.

Figs. 6a-d are schematic views of actuators according to some embodiments of the invention.

Fig. 7 is a schematic view of an actuator according to some embodiments of the invention.

Figs. 8a-d are schematic views of actuators according to some embodiments of the invention.

Figs. 9a-c are schematic views of actuators according to some embodiments of the invention.

Fig. 10 is a schematic perspective view of an actuator according to some embodiments of the invention.

Fig. 11 is a perspective view of a walker comprising actuators according to some embodiments of the invention.

**DETAILED DESCRIPTION OF EMBODIMENTS**

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise", "have", "include", "contain" and their respective forms, are open-ended linking verbs. As a result, a device that "comprises," "has," "includes" or "contains" one or more particular steps, possesses those one or more steps, but is not limited to possessing only those particular one or more steps.

The term acceleration is, when used throughout this disclosure, defined as acceleration and/or deceleration. In other words, the acceleration may be positive or negative and the teachings of this disclosure applies in either case. Further to this, the term rotational acceleration is in this disclosure defined to be equal to an angular acceleration and may, as mentioned above, be both positive and negative.

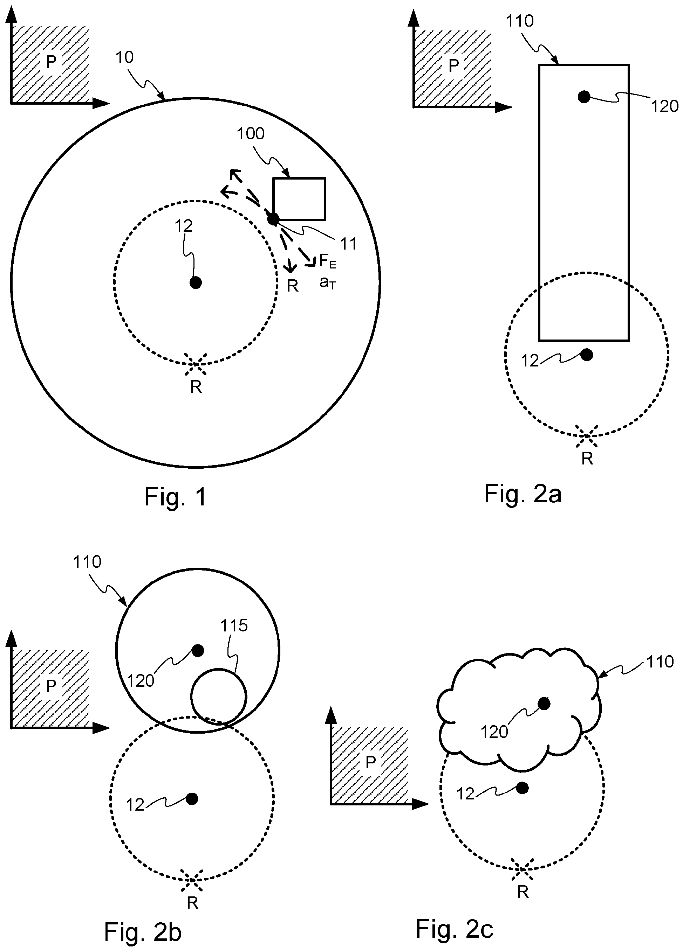

With reference to Fig. 1, the conceptual idea of an actuator 100 activated by transversal force $F_E$ arising from rotational acceleration of a rotatable object 10 will be described. Not too much detail will be given with regards to the physics of rotating bodies and the skilled person will understand, after digesting this disclosure, the underlying physics enabling the invention. The object 10 is rotatable about an object pivot point 12 in a plane of rotation P. From this point on, unless otherwise specified, all rotations are assumed to be in the same plane of rotation P unless something else is explicitly specified. Note that rotations referenced to be in the plane P may very well be parallel, or substantially parallel planes P, i.e. the plane P is to be considered a reference indicating that rotations are in the same or parallel planes P. It may be that the object 10 is rotatable in the plane P and that other bodies are rotatable in a plane angled with regard to the plane P. If this rotation is coupled to the rotation of the object 10 in manners taught herein, also such orientations are to be considered disclosed herein. A rotation R about the object pivot point 12 is, in Fig. 1, depicted with a dotted line showing that the rotation R may be either clockwise or anti-clockwise. Any real or hypothetical point 11 at, on, or in the rotatable object 10 will rotate with the object 10 about the object pivot point 12. An angular velocity of rotation of the object 10 will be the same as an angular velocity of the point 11. However, as is well known, the rotational speed in a tangential direction, i.e. a tangential speed, will depend on a distance from the object pivot point 12 to the point 11 where the tangential speed is determined. When the object 10 is rotating with a constant angular velocity, i.e. an angular acceleration of the object 10 is zero, the rotation will give rise to a radial centrifugal force on point 11 but no tangential force $F_E$ will occur from rotation with constant angular velocity. However, when the angular velocity changes, i.e. the absolute value of the angular acceleration of the object 10 is greater than zero, the acceleration will give rise to a tangential force $F_E$ commonly known as the Euler force arising from Euler acceleration. The Euler acceleration may also be known as azimuthal acceleration or transverse acceleration. These names, Euler, transverse and azimuthal, may be used interchangeably throughout this disclosure and are understood by the skilled person to be interpreted as the same force or acceleration. The Euler force $F_E$ is known from the art as a fictitious tangential force acting on a body with a mass m at a location r from the center of rotation 12 of the object 10. It may be calculated from the transverse acceleration $a_T$ of the angular velocity $\omega$ as detailed in Eqn. 1 below:

$$F_E = -m \times \overline{a}_T = -m \cdot \frac{\delta\omega}{\delta t} \times \overline{r} \qquad\qquad \text{Eqn. 1}$$

The rotating object 10, referenced in this disclosure as rotating in the plane of rotation P about an object pivot point 12, may be equated to a rotating reference frame as commonly used in physics when describing the Euler force $F_E$ and the transverse acceleration $a_T$.

The transversal force $F_E$ may be exemplified by a passenger riding a merry-go-round and facing in the direction of movement of the merry-go-round. As the merry-go-round starts, it accelerates and the passenger feels a force pushing her backwards in a direction opposite to the rotation of the merry-go-round. As the merry-go-round reaches its desired speed, the acceleration stops and the passenger is no longer pushed backwards. When the merry-go-round stops, it decelerates, or accelerates with a negative acceleration, and the passenger experience a force pushing her forward in the direction of rotation of the merry-go-round. As taught in Eqn. 1, these forces will be greater the further from the center of the merry-go-round the passenger is seated and the heavier the passenger is. The transverse acceleration is in the opposite direction of the angular acceleration.

It is the concept of this transverse acceleration $a_T$ and the Euler force $F_E$ that the inventors behind this disclosure has realized, after a significant inventive process, may be utilized when designing an actuator 100 activated by the angular acceleration of an object 10. That is to say, an actuator 100 that is activated primarily by the Euler force $F_E$.

Staying briefly with Fig. 1, the actuator 100 is depicted as located offset from the object pivot point 12, this is just one exemplary placement of the actuator 100 and the actuator may, as will be readily understood by the skilled person after reading this disclosure, be placed, attached of comprised at any location such that it is permitted to rotate with the object 10. In many cases, at least where the object 10 has a mass distribution that is uniform about the object pivot point 12, it may be desirable to place the actuator 100 uniformly about the object pivot point 12 in order not to introduce imbalance in the rotating object 10. Further to this, in Fig. 1, the object 10 is illustrated as encompassing the object pivot point 12, this is also but one exemplary embodiment. The object 10 may very well be arranged to rotate about the object pivot point 12 at a distance from the object pivot point 12. Imagine the object 10 being the circular roll of a yoyo and the object pivot point 12 is a person holding a string of the yoyo and spinning about. The yoyo will rotate about the object pivot point 12 at a distance determined by the length of the string.

From the introduction above, it is clear that any rotating body will experience the Euler force $F_E$ when subjected to angular acceleration. However, what the inventors have realized is, that any rotating body having a mass distribution that is nonuniform about its body pivot point may be used to activate an activator 100 by the Euler force $F_E$. For the sake of clarity and ease of explanation, such bodies, having a nonuniform mass distribution about its body pivot point, may, in this disclosure, be referred to as Euler bodies. This nonuniform mass distribution about its body pivot point may be fixed or dynamic due to e.g. flexibility of the Euler body. There may be liquid inside an Euler body such that the mass distribution is changed by e.g. centrifugal forces. Further to this, there may be elasticity in the design of the Euler body. All suitable particulars and derivatives of this definition are considered when referencing an Euler body.

In Figs. 2a-c, non-limiting exemplary embodiments of how Euler bodies 110 may be formed are shown. Starting in Fig. 2a, a substantially rectangular Euler body 110 is shown with a body pivot point 120 located offset towards one short end of the Euler body 110. Assuming that the rectangular body in Fig. 2a is uniform when it comes to e.g. material and thickness, having the body pivot point 120 offset will result in a nonuniform mass distribution about its body pivot point 120. As a layman's example, consider placing a rod through the body pivot point 120 and moving the rod about the object pivot point 12 such that it follows the dotted circle of rotation R. As the rotational speed increases, the Euler body 120 will orient itself radially with regards to the object pivot point 12 placing the end with the offset body pivot point 120 closest to the object pivot point 12. This is a result of the centrifugal force. When the rotation of the theoretical rod about the object pivot point 12 stops, the Euler body 110 will keep rotating about its body pivot point 120, i.e. the theoretical rod, in the same direction, i.e. clockwise or counter clockwise, as the rod was moved about the object pivot point 12. This is in part due to the Euler force $F_E$.

The same reasoning applies to the Euler body 110 of Fig. 2b wherein the body pivot point 120 is placed at the geometrical center of a substantially circular homogenously formed shape. In this example, the nonuniform mass distribution is achieved by forming an unbalancing element 115 on the circular body. The unbalancing element 115 may be realized by e.g. drilling a hole through the body or adding a weight to the body.

In Fig. 2c, a more cloud-like randomly formed Euler body 120 and its associated pivot point 12 is shown to further emphasize that the actual shape of the Euler body 120 is of little relevance to the teachings of this disclosure.

The important feature of the Euler bodies 110 are that their mass is nonuniformly distributed about their respective pivot points 12. It may be said that the Euler body 110 is to be formed such that its center of mass is offset from its body pivot point 120. Or, in other words, the Euler body 110 can be any body that is formed with a body pivot point 120 located such that the mass distribution of the Euler body 110 is nonuniform about the body pivot point 120. It will be apparent to the skilled person after reading and digesting this disclosure in its entity, that the invention disclosed is not limited to bodies having particular forms or shapes, but any suitable body having a nonuniform distribution of mass about its body pivot point 120 is covered by this description.

The Euler body 110 may be coupled to the object 10 at the body pivot point 120. Such a coupling may be accomplished by a pin fixed to the object 10 and inserted into a hole or crevice at the body pivot point 120. It may very well be a coupling utilizing e.g. bearing to reduce friction. The Euler body 110 may alternatively be coupled, at the body pivot point 120, to a plate or a housing and said plate or housing is then attached to the object 10. The skilled person will, after reading this disclosure, understand that there are numerous suitable ways of accomplishing this coupling and albeit not explicitly mentioned, all such couplings are considered part of this disclosure. Throughout this disclosure, unless explicitly stated otherwise, all discussed Euler bodies 110 are to be considered rotatably coupled to the object 10.

From the example above we learned that the Euler body 110 may be rotated about its body pivot point 120 by other forces than the Euler force $F_E$. Such forces may be gravitational forces, centrifugal forces or virtually any force acting on the Euler body 110 in the plane of rotation P towards or from the object pivot point 12. Forces in the plane of rotation P directed in other directions will have components causing rotation, or a change in rotation of the object 10 and consequently transversal acceleration $a_T$ of the Euler body 110. In order to reduce the effect of these forces acting on the Euler body 110 in the plane of rotation P towards or away from the object pivot point 12, an arrangement for locking the Euler body 110 in a position from which it is transitioned substantially only by transversal force $F_{TE}$ may be introduced. Such a locking arrangement may be accomplished in many different ways and the following examples are merely presented to describe the concept and are in no way to be considered as limiting to the invention. Returning again to the Euler body 110 of Fig. 2a, the Euler body 110 may be arranged with e.g. a friction element, a biasing element, a magnetic element, an electromagnetic element etc. between the object 10 and the Euler body 110. The arrangement may be such that that this element locks the Euler body 110 into a first position, but as the Euler body 110 is subjected to transversal force $F_E$ and/or acceleration $a_T$ this force or acceleration overcomes the force with which the element locks the Euler body 110 in the first position and the Euler body 110 is permitted to transition to a second mode in which it is permitted to, at least partly, rotate about its body pivot point 120. The amount of angular acceleration of the object 10 that is required to transition the Euler body 110 to the second position may be defined as a first threshold. This first threshold may be configurable, e.g. by controlling an electromagnetic force said element, and/or predefined.

When comprised in the actuator 100, the second mode of the Euler body 110 may be used to transition the actuator 100 to an activated state. Depending on the design, use and particular purpose of the actuator 100, the activated state may comprise a number of different features. The following are just exemplary embodiments of what the activated state of the actuator 100 may comprise and should in no way be seen as limiting to the invention. It may be that the actuator 100 is configured to audibly mark the transition into its activated state and this may be accomplished by e.g. the locking element introduced being configured to make a sound when it no longer locks the Euler body 110, the movement Euler body 110 interfacing with an element in such a way that a sound is produced etc. The activated state may alternatively or additionally comprise closing or opening an electrical circuit by the movement of the Euler body 110. Such workings are substantially those of an electrical switch by transitioning to or from a closed position when transitioning to or from the activated state. It should be noted that the movement of the Euler body 110 in the activated state may permit the Euler body 110 to interface with arrangements to mark the activated state. Also the body pivot point 120 may be used to mark the transition to or from the activated state. The pivot 120 may e.g. be arranged with a rotating member that may be suitable to transfer the movement of the Euler body 110 such that arrangements distal or proximal in the same or a different plane compared to the Euler body 110 may be used to mark the transition to or from the activated state. Additionally, or alternatively, the body pivot point 120 may be provided with a sensor arranged to estimate the rotational distance traveled by the Euler body 110 about the body pivot point 120. By estimating a time it takes for the Euler body 110 to rotate the estimated rotational distance, it is possible to estimate the transverse acceleration $a_T$ and the Euler force $F_E$ from Eqn. 1, assuming that the radius r from the object pivot point 12 and the mass m of the Euler body 110 is known. Analogously, the sensor at the body pivot point 120 may be expanded with, or replaced by, a distance sensor arranged to estimate the distance the Euler body 110 moves relative to the object 10.

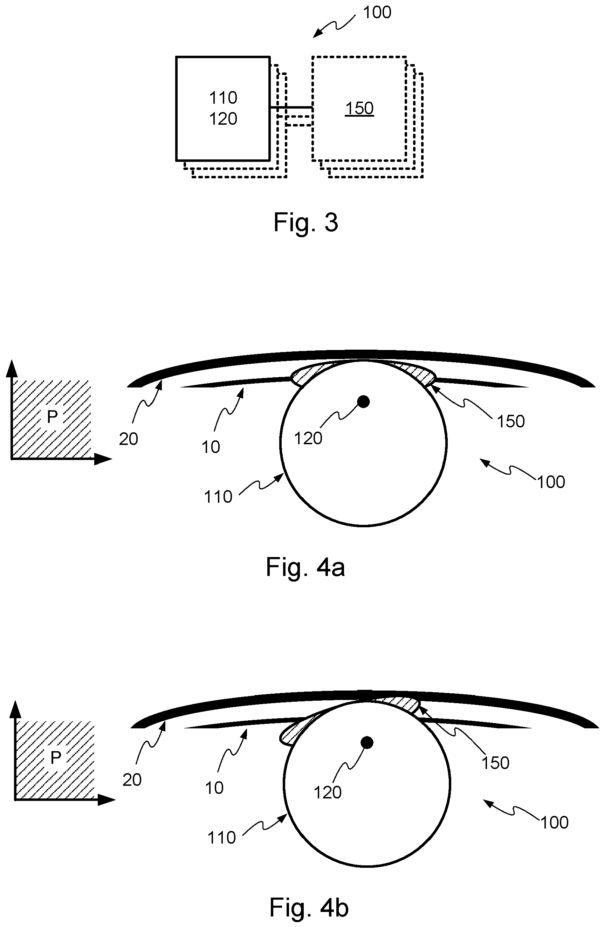

The actuator 100 may in some embodiments be provided with one or more coupling mechanisms 150, schematically depicted in Fig. 3, that may be arranged such that at least one coupling mechanism 150 is engaged when the actuator 100 transitions to the activated state. The coupling mechanism 150 may be defined e.g. as an element external to the Euler body 110 such as the switching functionality as disclosed above or as an integral part of the Euler body 110. The coupling mechanism 150 may comprise, or be configured to perform, a number of different features, and the following are just exemplary embodiments of features of the coupling mechanism 150. Note that the actuator 100 may be provided with more than one coupling mechanism 150, and each coupling mechanism 150 may be configured with different features. From the arrangement of each coupling mechanism 150, the actuator 100 may be configured to perform different features depending on e.g. the amount of transversal acceleration $a_T$ and/or the direction of the transversal acceleration $a_T$. The coupling mechanisms 150 may be arranged to engage with devices, bodies and apparatuses external from the object 10 and/or the actuator 100.

In one embodiment, the coupling mechanism 150 comprises an electronic switch that is actuated when the activator 100 transitions to its active state. In one embodiment, the coupling mechanism 150 comprises or engages one or more clutches. In a further embodiment, the coupling mechanism 150 is configured to engage with the object 10 and engage one or more clutches operatively coupled to the object 10. Such an embodiment is especially beneficial since it e.g. enables the actuator 100 to, by means of the clutching feature, disengage a drive of the object 10 when the actuator 100 is transitioned to its activated state. In one embodiment, the coupling mechanism 150 is configured to engage with the object 10. In one embodiment, the coupling mechanism 150 comprises or engages one or more brakes. In a further embodiment, the coupling mechanism 150 is configured to engage with the object 10 and engage one or more brakes operatively coupled to the object 10. The brake may be any suitable brake such as a friction break, a rotation barring element, a disc brake, a drum brake etc. Such an embodiment is especially beneficial since it e.g. enables the actuator 100 to, by means of the braking feature, reduce the rotation the object 10 when the actuator 10 is transitioned to its activated state.

It should be noted that the coupling arrangement 150 may very well be arranged to engage with other bodies than the object 10 and these bodies may be located and oriented in any suitable direction that may or may not be a part of or intersect with the plane of rotation P. For instance, in one embodiment the actuator 100 is comprised in an over-speed governor of an elevator and attached to a drive wheel of a wire supporting the elevator. In this example, the drive wheel is the object 10. When activated, the coupling mechanism 150 of the actuator 100 engages as a clamping brake acting upon the wire supporting the elevator rather than the drive wheel since the friction between the drive wheel and the wire is typically too low to efficiently brake the elevator.

For illustrative purposes, a sectional view of an exemplary embodiment of the actuator 100 arranged with coupling mechanism 150 in the form of a friction brake is shown in Figs. 4a-b. Fig. 4a is a sectional two dimensional top view and only show part of the object 10 and an external arrangement 20. The actuator 100 comprises a substantially circular Euler body 110 and the nonuniform mass distribution of the Euler body 110 is accomplished at least in part by the body pivot point 120 being off-centered on the substantially circular Euler body 110. The actuator 100 of Fig. 4a is illustrated with the Euler body 110 in its first position, i.e. the actuator is not in its activated state, and the actuator of Fig. 4b is illustrates the Euler body 110 at its second position, i.e. the actuator is in its activated state. As explained earlier, the body pivot point 120 is rotatably coupled to the object 10. The external arrangement 20 is assumed to extend in a plane perpendicular to the plane of rotation P. This extension forms a surface facing the object pivot point 12 and with which the coupling mechanism 150 may contact when the actuator 100 transitions to its activated state, Fig. 4b. The actuator 100 is arranged such that when the Euler body 110 is in its first position, Fig. 4a, the coupling mechanism 150 is located, in the plane of rotation P, between the object 10 and the body pivot point 120. In this non-activated state, the coupling mechanism is not engaging the surface of the external arrangement 20 facing the object pivot point 12. As the object 10 experience a change in rotation, the actuator 100 will transition to its activated state as the Euler body 110 rotates, at least partly, about the body pivot point 120 such that the coupling mechanism 150 engages said surface of the external arrangement 20, Fig. 4b. Depending on how much the Euler body 110 is rotated about its body pivot point 120, i.e. the amount of angular acceleration the object 10 is subjected to, the coupling mechanism 150 will press harder on the surface of the external arrangement 20. This illustrative embodiment will engage in substantially the same way when the object 10 is subjected to both positive acceleration, i.e. increase of rotational velocity, and negative acceleration, i.e. decrease of rotational velocity. The skilled person will understand, after reading this disclosure, that the coupling mechanism 150 may very well be formed such that different amounts of braking force is applied depending on the direction of angular acceleration of the object 10.

Is should be noted that the form of the coupling mechanism 150 paired with the location of the body pivot point 120 in relation to the Euler body 110 and the object 10, will determine at what acceleration of the object 10 the coupling mechanism 150 is engaged. In other words, the acceleration of the object 10 at which the actuator 100 is activated, is determined at least in part by these parameters.

The actuator 100 may be configured to comprise one or more coupling mechanisms 150 configured to both clutch, brake and/or switch according to the embodiments listed above. An embodiment of the actuator 100 combining clutching and braking features is especially beneficial since the object 10 may be e.g. both braked and disengaged from an associated drive.

In one embodiment, the coupling mechanism 150 may be realized by providing the body pivot point 120 with threads such that the Euler body 110 is moved in a direction substantially perpendicular to the plane of rotation P when it rotates about its body pivot point 120. Since the body pivot point 120 is attached to the object 10, this movement of the coupling mechanism 150 may be used to move the object 10 into a braking or a clutched mode. The clutching or braking functionality may be determined by the rotation of the Euler body 110 such that it brakes when rotating about its body pivot point 120 in one direction, and clutches when rotating about its pivot point 120 in the other direction.

If more than one coupling mechanism 150 is comprised in the actuator 100, the actuator may be configured such that not necessarily all coupling mechanisms 150 are activated at the same time. This may be accomplished by e.g. engaging the coupling mechanism 150 at different degrees of rotation of the Euler body 110 about the body pivot point 120, by having more than one Euler body 110 comprised in the actuator 100 and/or by utilizing a flexible coupling arrangement 150. A flexible coupling arrangement 150 may be accomplished by having e.g. a coupling arrangement 150 that is biased to or from an engaged position by e.g. centrifugal forces. The coupling mechanisms 150 may further be arranged such that one or more coupling arrangements 150 are activated upon rotation of the Euler body 110 about its body pivot point 120 in one direction and others are activated upon rotation of the Euler body 110 about its body pivot point 120 in another direction.

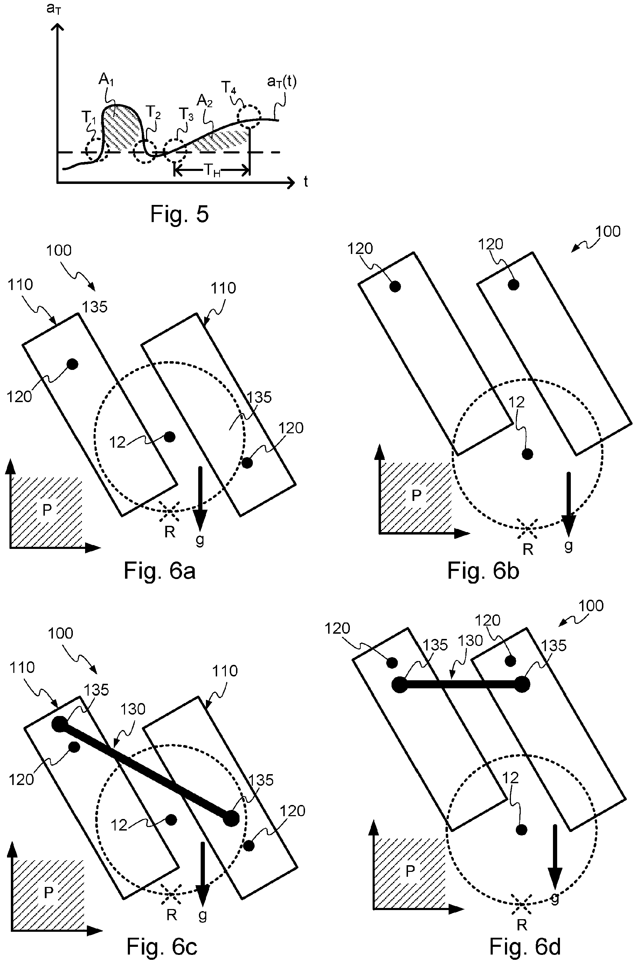

The coupling mechanism 150 as illustrated in Fig. 4a is shown at a distance from the object 10 when the Euler body 110 is in its first position. This means that when the actuator 100 transitions to its activated state, i.e. the Euler body 110 moves about its body pivot point 120 due to the rotational acceleration of the object 10 exceeding the first threshold, Fig. 4b, the Euler body 110 will rotate a certain amount before the coupling mechanism engages the object 10. This will effectively introduce a delay in the time it takes for the coupling mechanism 150 to engage with the object 10. If the angular acceleration falls below the first threshold before the Euler body 110 has rotated enough to engage the coupling mechanism 150, the coupling mechanism 150 will not have been activated. This delay may be referred to as a hold off time or jerk control. This is illustrated as a time series plot in the graph introduced in Fig. 5. In Fig. 5, time t is on the horizontal axis and the transversal acceleration $a_T$ is on the vertical axis. The time variant transversal acceleration $a_T(t)$ is shown as a line in the graph and the first threshold is illustrated as a dashed line. At a first time Ti the transversal acceleration $a_T(t)$ exceeds the first threshold and the Euler body 110 will start to rotate about its body pivot point 120. At a second time $T_2$, occurring before the Euler body 110 has rotated such that the coupling mechanism is activated, the transversal acceleration $a_T(t)$ falls below the first threshold. The Euler body 110 is returned to its first position without having actuated the coupling mechanism 150. At a third time $T_3$, the transversal acceleration $a_T(t)$ once more exceeds the first threshold and the Euler body 110 is moved from its first position by the Euler force $F_E$. At a fourth time $T_4$, the Euler body has rotated far enough to activate the coupling arrangement 150 and the actuator 100 is in effect actuated. Since the speed of rotation of the Euler body 110 will depend on the amount of angular acceleration of the object 10, it is in fact the integration $A_1$, $A_2$ of the transversal acceleration $a_T(t)$ exceeding the first threshold that determines if the Euler body 110 has time to rotate enough to activate the coupling arrangement 150. This means that the rotational acceleration of the object 10 has to exceed the first threshold for a hold of time $T_H$ before the actuator 100 is actuated. The hold of time $T_H$ is determined by the amount by which the transversal acceleration $a_T(t)$ exceeds the first threshold and the distance the Euler body 110 has to travel before the coupling arrangement 150 is activated. Controlling the hold off time $T_H$ may be beneficial since it allows the design of an actuator 100 that permits acceleration of the object 10 above the first threshold for short periods of time. In other words, the object 10 may be subjected to e.g. jerks etc., without unwanted activation. These scenarios may occur when the object 10 experienced short but natural acceleration due to e.g. bumps in the road in the case of the object 10 being a wheel on a vehicle, or when the actuator is used as an over-speed governor for an elevator and the elevator experiences accelerations for short periods of time due to e.g. a person jumping inside the elevator cage.

In many applications, it may be desirable to locate the Euler body 110 such that they introduce substantially no imbalance in the rotation of the object 10. In other words, assuming that the object 10 has its mass distributed homogenously about the object pivot point 12, rotatably coupling an Euler body 110 to the object 10 without shifting the total mass distribution about the object pivot point 12 will be difficult. The Euler body may be designed to compensate for this and placed such that it crosses the object pivot point 12 but such applications introduce inflexibility in the design and put design constraints on the Euler body 110. One solution is to use more than one Euler body 110 to compensate at least some of this imbalance. However, if more than one Euler body 110 is used, it is important that these are substantially synchronized in their respective movements as to not cause e.g. vibrations, imbalance etc. of the object 10. This may be accomplished by having tight tolerances in the design but tight tolerances typically e.g. adds cost and reduces production yield.

In addition to the reasoning above, more than one Euler body 110 may be desired in order to engage with more than one coupling mechanisms 150 performing different or the same features. It may be that there is a need to apply a braking feature at different locations of the object 10 and in such cases, more than one Euler body 110 may be utilized to engage coupling mechanisms 150 engaging or comprising breaking features located at different places of the object 10. The inventors behind this disclosure have further realized in their inventive processes, that Euler bodies 110 may be operatively coupled together so as to control their mutual movement about their respective body pivot point 120.

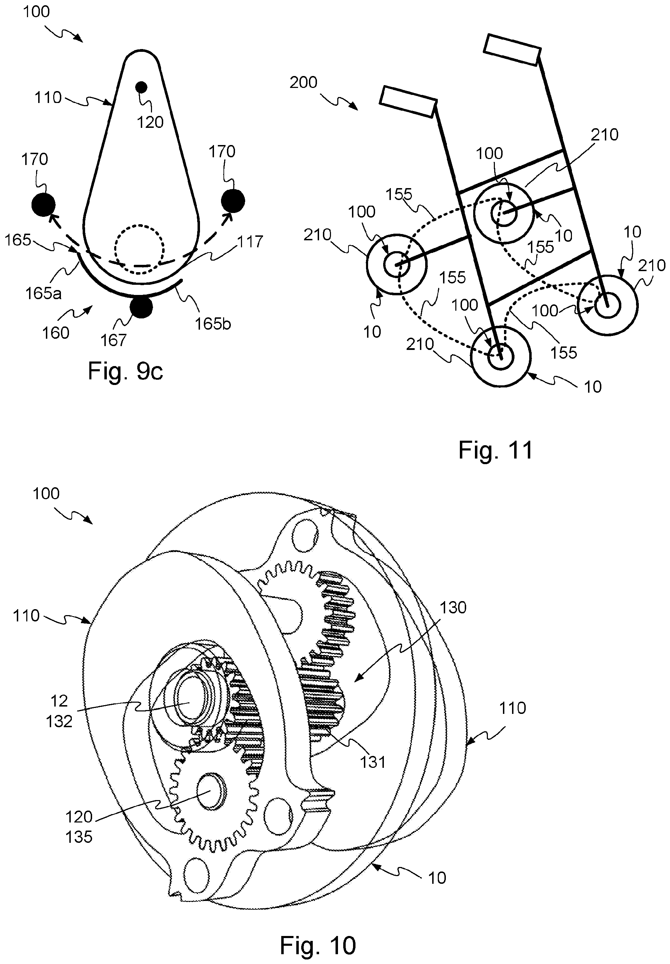

Turning now to Fig. 6a, wherein one non-limiting embodiment of the actuator 100 will be introduced for explanatory purposes. This embodiment is shown with two Euler bodies 110, each similar to the Euler body 110 of Fig. 2a, but it should be noted that Euler bodies 110 of any suitable form may be used when implementing these teachings and that a combination of Euler bodies 110 of different shapes, sizes and/or forms is also made possible by the invention at hand. The actuator 100 of Fig. 6a comprises two Euler bodies 110, each, as described before, rotatable about a respective body pivot point 120. As per the earlier definition of the Euler body 110, each of the Euler bodies 110 have a mass distribution that is nonuniformly distributed about their respective pivot points 120 and the pivot points 120 are rotatably coupled to the object 10. As is understood from previous sections, the Euler bodies 110 will, when the object 10 is subjected to transversal acceleration $a_T$, rotate about their respective body pivot points 120 in the same clockwise or counter clockwise direction, opposite to the transversal acceleration $a_T$. The Euler bodies 110 of Fig. 6a are shown as substantially mirrored across the object pivot point 12 but the location of the object pivot point 12 has little or no bearing on the inventive concept of this disclosure. More importantly, the Euler bodies 110 of Fig. 6a are mirrored with respect to each other, meaning that their respective mass distributions are mirrored. The mirroring of the Euler bodies 110 will have substantially no effect on the rotation caused by transversal acceleration $a_T$, but when the object 10 is subjected to forces such as gravity, vibrations and/or impulses, a force that will not cause transversal acceleration $a_T$ of the object, the Euler bodies will rotate in opposite directions. In Fig. 6a, when assuming a downward gravitational force g, the leftmost Euler body 110 will rotate clockwise and to a align itself with the gravitational force g and the rightmost Euler body 110 will rotate counter clockwise to align itself with the gravitational force g. Turning briefly to Fig. 6b, an embodiment is shown wherein Euler bodies 110, similar to those in Fig. 6a are illustrated, but without being mutually mirrored as in Fig. 6a. When the object of Fig. 10 is subjected to the gravitational force g, both Euler bodies 110 will rotate in a same clockwise direction to align themselves with the gravitational force g.

Turning now to Fig. 6c, a further embodiment of the actuator 100 of Fig. 6a is illustrated wherein the two Euler bodies 110 are operatively coupled by a coupling arrangement 130. The coupling arrangement 130 is rotatably coupled to each of the coupled Euler bodies 110 at at least one coupling point 135 of each coupled Euler body 110. The coupling arrangement 130 is configured to permit the Euler bodies 110 to move in response to the transversal forces $F_E$ occurring from rotational acceleration of the object 10. This means that the Euler bodies 110 are rotatably coupled by the coupling arrangement 130 and that the coupling arrangement 130 permits at least rotation in the same clockwise or counter clockwise direction about their respective body pivot points 120 of the connected Euler bodes 110. As will be taught from this disclosure, the shape and form of the coupling arrangement 130 may be varied and combined to configure numerous different coupling arrangements 130. Further to this, more than two Euler bodies 110 may be coupled by one coupling arrangement 130, and the actuator 100 may comprise more than one coupling arrangement 130. Rather than attempting to list all of these combinations, the workings and the requirements of the coupling arrangement 130 and the coupled Euler bodies 110 will be explained through some exemplary embodiments. One effect of the coupling arrangement 130 is that it ensures that the Euler bodies 110 coupled by the coupling arrangement 130 are all moving together about their respective pivot points 120 in response to a transversal acceleration $a_T$ of the object 10. This reduces the requirement of e.g. production accuracy and a more cost effective actuator 100 may be provided. In addition, the coupling arrangement 130 may be configured to effectively add the transversal acceleration $a_T$ of each Euler body 110 such that the total sum of the transversal acceleration $a_T$ may be utilized by e.g. the coupling mechanism 150. Similarly, Fig. 6d illustrates a further embodiment of the actuator 100 of Fig. 6b in which the two Euler bodies 110 of Fig. 6b are operatively coupled by the coupling arrangement 130.

In order to further explain the features of the coupling arrangement 130, assume that the Euler bodies 110 in Figs. 6c and 6d have a uniform mass distribution and that the location of their respective pivot points 120 is what provides the nonuniform mass distribution about their respective pivot points 120. This means that a side of the Euler body 110 towards which the body pivot point 120 is shifted, is the side with the lower mass distribution of the two sides. The same reasoning applies to any uniformly shaped body, e.g. substantially circular bodies, but the wording needs to be adjusted. In Fig. 6c, the coupling arrangement 130 is coupled, via one of its coupling points 135, to the lower mass distribution side of one Euler body 110 and to a higher mass distribution side, via another of its coupling points 135, to the other Euler body 110. The reason for this is the particular mutual arrangement of the Euler bodies 110 in Fig. 6c. The Euler bodies 110 have their respective mass distributions mirrored with respect to one another. In other words, in their first position, they are rotated substantially 180° about their pivot points 120 with respect to one another. Turning now to Fig. 6d, the Euler bodies 110 of Fig. 6d are oriented with their respective mass distributions in substantially the same orientation about their respective pivot points 120. In order for the coupling arrangement 130 to rotatably couple the Euler bodies 110 of Fig. 6d, the coupling points 135 are preferably located at, from a mass distribution perspective, the same side of the respective Euler body 110.

The mutual rotational difference in the arrangement of the Euler bodies 110 in the actuators 100 of Figs. 6c and 6d will now be used to explain a further inventive embodiment of the present invention. It has been explained and is now readily understood how the Euler bodies 110 may rotate about their respective pivot points 120 in a direction that is opposite to the direction of the rotational acceleration of the object 10. The object 10 may be subjected to accelerations and forces that are not causing a change in the angular velocity of the object 10. These forces may, depending on the force and the arrangement of the actuator 100, transition the actuator 100 to its activated state. Assume that the plane of rotation P referenced in Figs. 6c and 6d is substantially vertical. This means that the Euler bodies 110 would be susceptible to a gravitational force g such that the gravitational force g may give rise to rotation about their respective pivot points 120 as explained with reference to Figs. 6a and 6b above. The Euler bodies 110 shown in Fig. 6d are arranged with their respective mass distributions in substantially the same directions with respect to their respective pivot points 120. In this embodiment, the coupling arrangement 130 will permit rotation about the respective body pivot point 120 of each Euler body 110, both when the actuator 100 is subjected to transversal acceleration and gravitational forces g. Now, subjecting the actuator 100 of Fig. 6c to gravitational forces g, the Euler bodies 110 will be subjected to forces urging them to rotate, with respect to one another, in opposite clockwise or counter clockwise directions about their respective pivot points 120. However, the coupling arrangement is arranged such that rotation of the Euler bodies 110 in respective opposite directions about their respective pivot points 120 is hindered. As the Euler bodies 110 in Fig. 6c are arranged to rotate in opposite directions when subjected to a gravitational force g, the effects of gravitational forces on the actuator 100 is efficiently cancelled. If more than one Euler body 110 is present, the skilled person understands that it is sufficient that just one of these Euler bodies 110 is arranged to rotate oppositely to the others from e.g. gravitational forces. In order to ensure that such rotation is cancelled by the coupling arrangement 130, it may be necessary to ensure that substantially the same total torque is provided by the Euler bodies 110 rotating in each direction from e.g. gravitational forces.

Further to this, the embodiment of Fig. 6c may be configured to be substantially unaffected by centrifugal forces. The coupling arrangement 130 and the Euler bodies 110 with respect to the object point 12, are arranged such that the coupling arrangement will oppose rotation of the Euler bodies 110 occurring from centrifugal forces. The centrifugal force will urge the Euler bodies 110 to rotate such that their center of mass is located distal from the body pivot point 120 and aligned with the body pivot point 120 and the object pivot point 12. If the coupling arrangement 130 is a resilient coupling arrangement 130, it may be configured to stretch and permit at least some rotation of the Euler bodies 110 due to centrifugal forces, or any other forces in a radial direction for that matter. However, the coupling arrangement 130 is arranged such that it will mitigate activation, or rotation, by centrifugal forces and permit activation by transversal acceleration. The skilled person will understand, after reading this disclosure, how to arrange the coupling arrangement 130 and the Euler bodies 110 in order to achieve the desired effect.

From the previous section, it is understood that the coupling arrangement 130 efficiently bars the Euler bodies 110 from rotation in opposite directions. This was exemplified by gravitational forces g acting upon the actuator 100 but this applies also to other forces or components of forces acting upon the actuator 100. In fact, the reasoning applies to any force in, or parallel to, the plane of rotation P directed to or away from the object pivot point 12. That is, any force, in the plane of rotation P not causing a change in angular velocity of the object 10.

The skilled person will understand, after digesting the teachings of this disclosure, how to arrange the coupling arrangement 130 such that Euler bodies 110 coupled by the coupling arrangement 130 are permitted to rotate in the same clockwise or counter clockwise direction about their respective pivot points 120. This is important as it enables an actuator 100 with this arrangement to be activated by rotational acceleration of the object 10. The arrangement of the coupling arrangement 130 to achieve this depends on the mutual arrangement of the mass distributions of the coupled Euler bodies 110. In Fig. 6c, the Euler bodies 110 are mirrored and consequently the coupling arrangement is coupled at coupling points 135 located at mirrored sides of the pivot points 120 of the Euler bodies 110. Analogously, in Fig. 6d, the Euler bodies 110 are not mirrored and consequently the coupling arrangement is coupled at coupling points 135 located at corresponding sides of the pivot points 120 of the Euler bodies 110.

Having the actuator 100 configured with the Euler bodies 110 and the coupling arrangement 130 arranged as illustrated in Fig. 6c has further benefits. As explained, the Euler bodies 110 are efficiently inhibited from rotating in opposite directions by the coupling arrangement 130, and the Euler bodies 110 are arranged to rotate in opposite directions from forces in the plane of rotation P not causing a change in angular velocity of the object 10. This configuration of the actuator 100 makes it possible to design the actuator 100 without the previously explained element provided to lock the Euler body 110 in the first position. If the coupling arrangement together with the pivot points 120 are assumed to be ideal without friction, such an actuator 100 would transition to its activated state as soon as the object 10 was subjected to rotational acceleration. Since ideal devices are scarce, the rotational acceleration needed to activate the actuator 100 will be decided, at least in part, by the friction inherent to the actuator 100.

It should be understood that the abovementioned mutual arrangement of the Euler bodies 110 and the coupling arrangement 130 is an optional embodiment of the actuator 100. The examples given are in no way to be construed as limiting the invention but are given merely to explain the conceptual idea of how to arrange the Euler bodies 110 and the coupling arrangement 130 to achieve a specific effect. The coupling arrangement 130 is arranged to permit the Euler bodes 110 to rotate in the same clockwise or counter clockwise direction about their respective pivot points 120. The coupling arrangement 130 may further be arranged to inhibit rotation in opposite clockwise or counter clockwise direction about their respective pivot points 120. That is, to cancel rotational effects on the Euler bodies 110 caused by any force, in, or parallel to, the plane of rotation P not causing a change in angular velocity of the object 10 such as e.g. gravitational forces g.

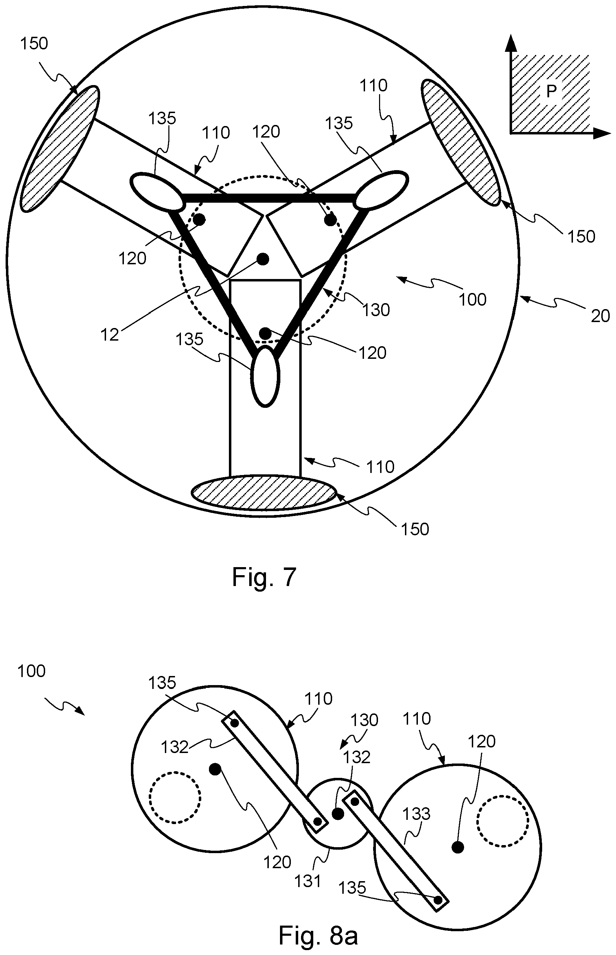

With reference to Fig. 7, a non-limiting embodiment of the actuator 100 is depicted to show one example of how an actuator 100 with more than two Euler bodies 110 may be arranged. In this embodiment, the actuator 100 comprises three substantially rectangular Euler bodies 110 arranged separated by 120° about the object pivot point 12. Each Euler body 110 is configured with a coupling mechanism 150 arranged to engage with the external arrangement 20 when the actuator 100 transitions to its activated state. The coupling arrangement 130 rotationally couples the three Euler bodies 110 together. In this embodiment, the coupling points 135 at each Euler body 110 is configured to be flexible in order to allow some tolerance in the movement of the Euler bodies 110, this is an optional feature.

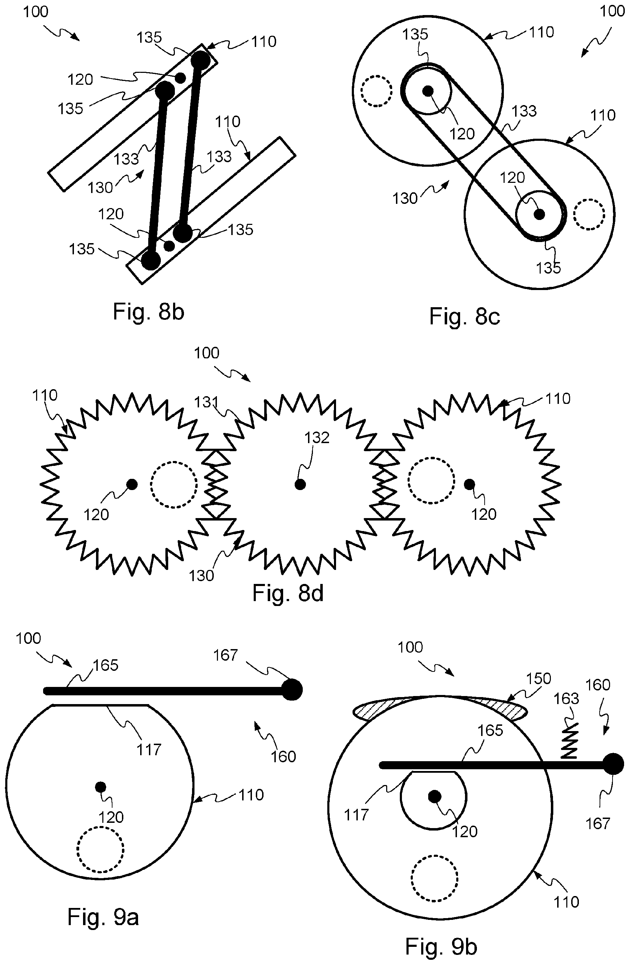

With reference to Figs. 8a-d, some further non-limiting embodiments of the actuator 100 will be shown. In Fig, 8a, an actuator 100 comprising two substantially circular Euler bodies 110 is shown. The mass distribution of each of the Euler bodies 110 is rotated, compared to one another, 180° about their respective pivot points 120. The area of the Euler body 110 with a higher concentration of mass is indicated by the dotted circles in Figs. 8a and 8c. The coupling arrangement 130 in Fig. 8a comprises a transmission in the form of a transmission member 131 coupled to each Euler body 110 by means of two coupling members 133. The coupling members 133 are rotatably coupled to the transmission member 131 and the transmission member 131 is rotatable about a coupling arrangement pivot point 132. The coupling arrangement pivot point 132 may be the object pivot point 12.

Turning to Fig. 8b, an actuator 100 comprising two substantially rectangular Euler bodies 110 is shown. The coupling arrangement 130 of this particular embodiment comprises two coupling members 133. Each coupling member 133 couples to a side with a higher mass distribution at one Euler member 110, and to a side with a lower mass distribution at the other Euler member 110. This embodiment enables a stable and secure coupling.

An alternative embodiment of the actuator 100 is shown in Fig. 8c, wherein the coupling arrangement 130 comprises a coupling member 133 in the form of a belt. The Euler bodies 110 are substantially circular with their mass distribution indicated by dashed circles in Fig. 8c. The coupling member 133 is operatively coupled to each Euler body 110 at coupling points 135 having their center of rotation at the body pivot point 120 of each Euler body 110. The coupling points 135 are arranged to couple rotation of each Euler body 110 by friction between the coupling points 135 and the belt. Alternatively, the belt may be provided with cogs that engage the coupling points 135 or replaced with a chain in which case the coupling points 135 may be replaced by cog-wheels.

In Fig. 8d, an actuator 100 comprising two substantially circular Euler bodies 110 is shown. The Euler bodies 110 are provided with cogs and the coupling arrangement 130 comprises a transmission member 131 in the form of a cog-wheel. This particular embodiment does not have any coupling points 135 per say, but the areas where the cogs of the Euler bodies 110 engage with the cogs of the transmission member 131 may be equated to coupling points. There may very well be more transmission members 131 and these may be combined with the coupling members 133 and these teachings may be combined in any suitable way. The cog-wheel of Fig. 8d may very well be any suitable transmission e.g. wheels, chains, belts, cogged belts and/or ribbon.

From the description above it is apparent that the coupling arrangement 130 and the Euler bodies 110 may be provided and combined in numerous different shapes and forms. From the disclosure at hand it is apparent that one Euler body 110 may be used to transition the actuator 100 to an activated state. If more than one Euler body 110 is comprised in the actuator 100, two or more, but not necessarily all of these Euler bodies 110 may be coupled together by the coupling arrangement 130. Further to this, the skilled person has been taught that the Euler bodies 110 may be mutually arranged so that they will be urged to rotate in different directions when the object 10 is subjected to forces not resulting in a change of angular velocity. The coupling arrangement 130 may be used to bar these opposite rotations such that there is reduced risk of unwanted activation of the activator by these forces.

One alternative feature of the actuator 100 will now be described with reference to the non-limiting exemplary embodiments of Figs. 9a-c. The actuator 100 may further comprise one or more return biasing arrangements 160 arranged to transition the actuator 100 from that activated state when the angular acceleration of the object 10 is below a certain level. This level may be defined by a configurable or predefined second threshold. The second threshold may be the same as or different from the first threshold. The return biasing arrangement 160 may be arranged in any number of suitable configurations such that the Euler body 110 is returned to its first position when the angular acceleration of the object 10 is below the second threshold. The return biasing arrangement 160 may be arranged to engage one or more of the Euler bodies 110 and/or the coupling arrangement 130 when the angular acceleration of the object 10 is below the second threshold. The return biasing arrangement 160 allows the actuator 100 to transition to and from its activated state in a controlled manner depending on the angular acceleration of the object 10.

With reference to Fig. 9a, one exemplary embodiment of the return biasing arrangement 160 is shown. The Euler body 110 of Fig. 9a is formed as a circle with a cut-off and has its mass unevenly distributed about its body pivot point 120 as indicated by the dashed circle in Fig. 9a. The cut-off is configured to form a biasing surface 117. In this embodiment, the return biasing arrangement 160 comprises a biasing member 165 arranged such that the biasing member 165 will come in contact with the biasing surface 117 as the Euler body 110 rotates about its body pivot point 120. The biasing member 165 is attached to the object 10 at a fixation point 167. The return biasing effect may be accomplished by a number of different features. The biasing member 165 may be formed from a material with flexible properties such that the biasing member 165 is allowed to flex when engaging the biasing surface 117 so that tension is introduced into the biasing member 165. The amount of tension exerted by the biasing surface 117 on the biasing member 165 will be determined by the amount of Euler force $F_E$ the Euler body 110 is subjected to. The flexibility of the biasing member 165 may be designed such that the second threshold is determined at least in part by the flexibility of the biasing member 165. In some embodiments it may be preferable to have the biasing feature of the biasing arrangement 160 comprised at the fixation point 167. This may be achieved by having the biasing member 165 arranged such that it may rotate about its associated fixation point 167 and have the biasing member 165 add tension to a spring at the fixation 167 as the biasing member 165 rotates about the fixation point 167.

In Fig. 9b, one embodiment of the return biasing arrangement 160 is shown wherein the biasing surface 117 is formed about the body pivot point 120 of a substantially circular Euler body 110. This is beneficial when it is unsuitable to engage peripheral edges of the Euler body 110 if they are for instance provided with coupling mechanisms 150. The return biasing arrangement 160 of fig. 9b is similar to that of Fig. 9a but is shown with a spring 163. The spring 163 allows the biasing member 165 to rotate about its fixation point 167 but tension is added to the spring 163 during this rotation. As the Euler force $F_E$ falls below the second threshold, the tension of the spring 163 acts upon the biasing member 165 which in turn acts upon the biasing surface 117 to return the Euler body 110 to its first position.

The return biasing arrangements 160 of Figs. 9a and 9b are both arranged to return the Euler body 110 as the Euler force $F_E$ falls below the second threshold regardless of the direction of the Euler force $F_E$. In Fig. 9c, one embodiment of the return biasing arrangement 160 is shown wherein the biasing member 165 is formed into two parts 165a, 165b such that the rotation of the Euler body 110 will engage one of the parts 165a, 165b upon rotation in one direction about its body pivot point 120, and the other of the parts 165a, 165b upon rotation in the other direction. This may effectively be used to have different second thresholds depending on the direction of rotation of the Euler body 110.

The actuator 100 of Fig. 9c is further provided with one additional optional feature, one or more movement limiters 170. The movement limiter 170 is arranged to stop the Euler body 110 from rotating too far about its body pivot point 120. The movement limiter 170 may, as in Fig. 9c, be realized by a bar attached to the object 10. The functionality of the movement limiter 170 may be accomplished by other parts of the actuator 100 such as the return biasing arrangement 160, the coupling mechanism 150 and/or the previously disclosed element locking the Euler body 110 into the first position. The movement limiter 170 may be comprised in any suitable embodiment of the actuator 100.

The embodiments of Figs. 9a-c introduce several different features and it should be noted that these features may be freely combined in any suitable way. These embodiments have been shown without the coupling arrangement 130 but it should be understood that the coupling arrangement 130 is in no way limiting for the biasing arrangement. The coupling arrangement 130 will allow other Euler bodies 110 coupled by the coupling arrangement 130 to benefit from a return biasing arrangement 160 acting on just one or more of the coupled Euler bodies 110. Further to this, there may be more than one return biasing arrangement 160 in the actuator 100 and they may be arranged in any suitable configuration and may engage the same or different Euler bodies 110 or coupling arrangements 130. For the sake of completeness, the return biasing arrangement 160 may additionally or alternatively be configured to engage the coupling arrangement 130. This may be achieved by e.g. engaging biasing surfaces 117 at the coupling arrangement 130, spring loading the coupling arrangement pivot point 132, see e.g. Figs. 8a, 8d, etc.

The embodiments of Figs. 9a-c are described as mainly mechanical but it should be understood that corresponding functions may be implemented by electronic, electromagnetic and/or magnetic means.

For illustrative purposes, and ease of explanation, the actuator 100 has been described as located at one side of the object 10. It should be understood that this is but one option. In Fig. 10, a perspective view of one embodiment of the actuator 100 is shown. The object 10 is in Fig. 10 illustrated as transparent, and two Euler bodies 110 are arranged to sandwich the object 10 in separate planes parallel to the plane of rotation P. The Euler bodies 110 are formed substantially alike but are arranged with their mass distribution rotated 180° with regards to one another. The Euler bodies 110 are operatively coupled by means of a coupling arrangement 130 comprising a transmission member 131. In this embodiment, the pivot points 120 and coupling points 135 of each Euler body are at the same respective location. The coupling arrangement pivot point 132 and the object pivot point 12 are also at the same location.

The coupling mechanism 150, introduced with reference to Fig. 3, may, as previously disclosed, be arranged to operative couple to external devices. One such embodiment will be explained with reference to Fig. 11. Fig. 11 shows a perspective view of a walker 200 comprising four wheels 210. All of the wheels 210 are provided with actuators 100 according to embodiments of this invention. In other embodiments, only a subset of the wheels 210 are provided with actuators. If a person using the walker 200 should stumble and start falling, the actuators 100 may be arranged to activate a coupling mechanism 150 in the form of a suitable brake. This will allow the walker to stop and the person may regain her balance without falling. One or more of the coupling arrangements 150 of the actuators 100 may further be provided with an external interface 155. The external interface may be used to operatively couple one or more actuators 100 together such that e.g. all or some of the actuators 100 may brake simultaneously if one is activated. This is beneficial since if e.g. the person trips in a sideways direction such that only one wheel experiences an angular acceleration exceeding the first threshold, there is reduced risk of the walker 200 turning or rotating.

In the embodiment with the walker 200, it is beneficial to design the actuators 100 with a controlled hold off time $T_H$. If the actuators 100 are set with high sensitivity, i.e. comparably low first threshold, the hold off time $T_H$ will reduce the risk of the actuators 100 activating when e.g. traversing thresholds or edges of sidewalks. To exemplify, traversing a threshold will give rise to jerks that may cause a high, but comparably short angular acceleration, the hold off time $T_H$ reduces the risk of unwanted activation in such scenarios. It should be mentioned that the coupling arrangement 130 may be arranged to avoid unwanted activation arising from similar scenarios not causing angular acceleration. This may be the case when e.g. a wheel 10 of a walker 200 falls into a hole in the ground causing a bump or jerk with a substantially vertical force as the wheel 10 hits the ground.

The external interface 155 may be accomplished by a wire being pulled by e.g. the movement of the coupling arrangement 150 or the Euler bodies 110. Alternatively, or additionally, the external interface 155 may be a wireless or wired communications interface arranged to communicate with external devices e.g. servers, mobile terminals, other actuators 100 etc.

**Claims**

1. An actuator (100) primarily activated by transversal acceleration arising from rotational acceleration of a rotatable object (10), wherein the object (10) is rotatable in a plane of rotation (P) about an object pivot point (12) in the plane of rotation (P), the actuator (100) comprising:

   at least two bodies (110) adapted to be rotatably, in or parallel to the plane of rotation (P), coupled to the object (10) at a body pivot point (120) of each body (110), wherein the body pivot point (120) and/or the body (110) is arranged such that a mass distribution of the body (110) is nonuniform about the body pivot point (120), and at least one coupling arrangement (130) arranged to operatively couple at least two of said at least two bodies (110); wherein
   due to said nonuniform mass distribution about the body pivot point (120), the actuator (100) is configured to transition to an activated state, in response to rotational acceleration of the object (10), by said at least two bodies (110) rotating about their respective body pivot points (120) in a direction opposite to a direction of said rotational acceleration of the object (10).

2. The actuator (100) of claim 1, wherein the at least two bodies (110) operatively coupled by means of the coupling arrangement (130) are arranged such that the nonuniform mass distribution about their respective body pivot point (120) cause rotational movement in or parallel to the plane of rotation (P), with respect to said at least two bodies (110) operatively coupled by means of the coupling arrangement (130), opposite directions about their respective body pivot point (120) when the object (10) is subjected to a force, directed in or parallel to the plane of rotation (P), which does not cause rotational acceleration of the object (10).

3. The actuator (100) of claim 2, wherein said at least two bodies (110) operatively coupled by means of said at least one coupling arrangement (130) and said at least one coupling arrangement (130) are arranged to disable rotational movement about each body pivot point (120) of said operatively coupled bodies (110) arising from one or more forces, directed in or parallel to the plane of rotation (P), which does not cause rotational acceleration of the object (10).

4. The actuator (100) of any of the preceding claims, comprising one coupling arrangement (130) arranged to couple only two of said at least two bodies (110) together.

5. The actuator (100) of any of the preceding claims, wherein the actuator (100) further comprises at least one coupling mechanism (150) and the actuator (100) is further configured to, when transitioning to the activated state, engage at least one of said at least one coupling mechanisms (150).

6. The actuator (100) of claim 5, wherein at least one of said at least one coupling mechanisms (150) is configured to engage directly or indirectly with object (10) such that a current rotational speed of the object (10) is changed.

7. The actuator (100) of any of claims 5 to 6, wherein at least one of said at least one coupling mechanisms (150) is a friction brake.

8. The actuator (100) of any of claims 5 to 7, wherein at least one of said at least one coupling mechanisms (150) is a clutch.

9. The actuator (100) of any of claims 5 to 8, wherein at least one of said at least one coupling mechanisms (150) is an electronic coupling mechanism.

10. The actuator (100) of any of claims 5 to 9, wherein at least one of said at least one coupling mechanisms (150) comprises an external interface (155) for activating the actuator (100) and/or for controlling devices external to the actuator (100).

11. The actuator (100) of any of claims 5 to 10, wherein the actuator (100) is configured to delay the engagement of at least one of said at least one coupling mechanisms (150) by a hold off time ($T_H$), wherein the hold off time (TH) is determined by the amount by which the transversal acceleration exceeds a first threshold for activation of the actuator (100) and the distance the body (110) has to travel before said at least one of said at least one coupling mechanisms (150) is activated.

12. The actuator (100) of any of the preceding claims, further comprising at least one return biasing arrangement (160) arranged to transition the actuator (100) from the activated state when the rotational acceleration of the object (10) is below a predefined or configurable second threshold.

13. The actuator (100) of claim 12, wherein said at least one return biasing arrangement (160) comprises at least one biasing member (165) arranged to return the actuator (100) from the activated state by acting upon at least one of said operatively coupled bodies (110) and/or said at least one coupling arrangement (130).

14. The actuator (100) of claim 12 or 13, wherein the predefined or configurable first threshold and the predefined or configurable second threshold are determined in part by the configuration of said at least one return biasing arrangement (160).

15. The actuator (100) of any of the preceding claims, wherein the operative coupling of said at least two bodies (110) by means of the coupling arrangement (130) is by means of a mechanical coupling, preferably, the mechanical coupling comprises one or more transmission members (131) and/or one or more coupling members (133).

**Patentansprüche**

1. Aktuator (100), der hauptsächlich durch Querbeschleunigung aktiviert wird, die sich aus der Drehbeschleunigung eines drehbaren Objekts (10) ergibt, wobei das Objekt (10) in einer Drehebene (P) um einen Objektschwenkpunkt (12) in der Drehebene (P) drehbar ist, wobei der Aktuator (100) aufweist:

   mindestens zwei Körper (110), die ausgelegt sind, in oder parallel zu der Drehebene (P) mit dem Objekt (10) an einem Körperschwenkpunkt (120) jedes Körpers (110) drehbar gekoppelt zu sein, wobei der Körperschwenkpunkt (120) und/oder der Körper (110) derart angeordnet ist, dass eine Massenverteilung des Körpers (110) in der Drehebene (P) dass eine Massenverteilung des Körpers (110) um den Körperschwenkpunkt (120) ungleichmäßig ist, und
   mindestens eine Kopplungsanordnung (130), die angeordnet ist, um mindestens zwei der mindestens zwei Körper (110) betriebsmäßig zu koppeln; wobei
   aufgrund der ungleichmäßigen Massenverteilung um den Körperschwenkpunkt (120) der Aktuator (100) konfiguriert ist, als Reaktion auf eine Drehbeschleunigung des Objekts (10) in einen aktivierten Zustand überzugehen, indem sich die mindestens zwei Körper (110) um ihre jeweiligen Körperschwenkpunkte (120) in einer Richtung entgegengesetzt zu einer Richtung der Drehbeschleunigung des Objekts (10) drehen.

2. Aktuator (100) nach Anspruch 1, wobei die mindestens zwei Körper (110), die mittels der Kopplungsanordnung (130) betriebsmäßig gekoppelt sind, derart angeordnet sind, dass die ungleichmäßige Massenverteilung um ihren jeweiligen Körperschwenkpunkt (120) eine Drehbewegung in oder parallel zu der Drehebene (P) bewirkt, in Bezug auf die mindestens zwei Körper (110), die mittels der Kopplungsanordnung (130) betriebsmäßig gekoppelt sind, entgegengesetzte Richtungen um ihren jeweiligen Körperschwenkpunkt (120), wenn das Objekt (10) einer in oder parallel zu der Drehebene (P) gerichteten Kraft ausgesetzt ist, die keine Drehbeschleunigung des Objekts (10) bewirkt.

3. Aktuator (100) nach Anspruch 2, wobei die mindestens zwei Körper (110), die mittels der mindestens einen Kopplungsanordnung (130) betriebsmäßig gekoppelt sind, und die mindestens eine Kopplungsanordnung (130) angeordnet sind, um eine Drehbewegung um jeden Körperschwenkpunkt (120) der betriebsmäßig gekoppelten Körper (110), die sich aus einer oder mehreren in oder parallel zu der Drehebene (P) gerichteten Kräften ergibt, die keine Drehbeschleunigung des Objekts (10) bewirken, zu verhindern.

4. Aktuator (100) nach einem der vorhergehenden Ansprüche, aufweisend eine Kopplungsanordnung (130), die angeordnet ist, um lediglich zwei der mindestens zwei Körper (110) miteinander zu koppeln.

5. Aktuator (100) nach einem der vorhergehenden Ansprüche, wobei der Aktuator (100) ferner mindestens einen Kopplungsmechanismus (150) aufweist und der Aktuator (100) ferner konfiguriert ist, beim Übergang in den aktivierten Zustand mit mindestens einem des mindestens einen Kopplungsmechanismus (150) in Eingriff zu gelangen.

**6.** Aktuator (100) nach Anspruch 5, wobei mindestens einer der mindestens einen Kopplungsmechanismen (150) konfiguriert ist, mit dem Objekt (10) direkt oder indirekt derart in Eingriff zu gelangen, dass eine aktuelle Drehzahl des Objekts (10) geändert wird.

**7.** Aktuator (100) nach einem der Ansprüche 5 bis 6, wobei mindestens einer der mindestens einen Kopplungsmechanismen (150) eine Reibungsbremse ist.

**8.** Aktuator (100) nach einem der Ansprüche 5 bis 7, wobei mindestens einer der mindestens einen Kopplungsmechanismen (150) eine Kupplung ist.

**9.** Aktuator (100) nach einem der Ansprüche 5 bis 8, wobei mindestens einer der mindestens einen Kopplungsmechanismen (150) ein elektronischer Kopplungsmechanismus ist.

**10.** Aktuator (100) nach einem der Ansprüche 5 bis 9, wobei mindestens einer der mindestens einen Kopplungsmechanismen (150) eine externe Schnittstelle (155) zur Aktivierung des Aktuators (100) und/oder zur Steuerung von Vorrichtungen außerhalb des Aktuators (100) aufweist.

**11.** Aktuator (100) nach einem der Ansprüche 5 bis 10, wobei der Aktuator (100) konfiguriert ist, den Eingriff mindestens eines der mindestens einen Kopplungsmechanismen (150) um eine Haltezeit ($T_H$) zu verzögern, wobei die Haltezeit (TH) durch den Betrag, um den die Querbeschleunigung einen ersten Schwellenwert zur Aktivierung des Aktuators (100) überschreitet, und die Strecke, die der Körper (110) zurücklegen muss, bevor der mindestens eine der mindestens einen Kopplungsmechanismen (150) aktiviert wird, bestimmt wird.

**12.** Aktuator (100) nach einem der vorhergehenden Ansprüche, ferner aufweisend mindestens eine Rückstellvorspannanordnung (160), die angeordnet ist, um den Aktuator (100) aus dem aktivierten Zustand zu versetzen, wenn die Drehbeschleunigung des Objekts (10) unter einem vordefinierten oder konfigurierbaren zweiten Schwellenwert liegt.

**13.** Aktuator (100) nach Anspruch 12, wobei die mindestens eine Rückstellvorspannanordnung (160) mindestens ein Vorspannelement (165) aufweist, das angeordnet ist, um den Aktuator (100) aus dem aktivierten Zustand zurückzuführen, indem es auf mindestens einen der betriebsmäßig gekoppelten Körper (110) und/oder die mindestens eine Kopplungsanordnung (130) wirkt.

**14.** Aktuator (100) nach Anspruch 12 oder 13, wobei der vordefinierte oder konfigurierbare erste Schwellenwert und der vordefinierte oder konfigurierbare zweite Schwellenwert zum Teil durch die Konfiguration der mindestens einen Rückstellvorspannanordnung (160) bestimmt sind.

**15.** Aktuator (100) nach einem der vorhergehenden Ansprüche, wobei die betriebsmäßige Kopplung der mindestens zwei Körper (110) mittels der Kopplungsanordnung (130) mittels einer mechanischen Kopplung erfolgt, vorzugsweise die mechanische Kopplung ein oder mehrere Übertragungselemente (131) und/oder ein oder mehrere Kopplungselemente (133) umfasst.


**Revendications**

**1.** Actionneur (100) principalement activé par une accélération transversale résultant d'une accélération de rotation d'un objet (10) pouvant tourner, dans lequel l'objet (10) peut tourner dans un plan de rotation (P) autour d'un point de pivotement (12) d'objet dans le plan de rotation (P), l'actionneur (100) comprenant :

au moins deux corps (110) adaptés pour être couplés à l'objet (10) de manière rotative, dans le plan de rotation (P) ou parallèlement à celui-ci, en un point de pivotement de corps (120) de chaque corps (110), dans lequel le point de pivotement de corps (120) et/ou le corps (110) est agencé de sorte qu'une répartition de masse du corps (110) ne soit pas uniforme autour du point de pivotement de corps (120), et
au moins un agencement de couplage (130) pour coupler fonctionnellement au moins deux desdits au moins deux corps (110) ; dans lequel
en raison de ladite répartition de masse non uniforme autour du point de pivotement de corps (120), l'actionneur (100) est configuré pour passer à un état activé en réponse à une accélération de rotation de l'objet (10) par lesdits au moins deux corps (110) tournant autour de leurs points de pivotement de corps (120) respectifs dans une direction opposée à une direction de ladite accélération de rotation de l'objet (10).

**2.** Actionneur (100) selon la revendication 1, dans lequel les au moins deux corps (110) couplés fonctionnellement au moyen de l'agencement de couplage (130) sont agencés de sorte que la répartition de masse non uniforme autour de leur point de pivotement de corps (120) respectif provoque un mouvement de rotation dans le plan de rotation (P) ou parallèlement à celui-ci, en ce qui concerne lesdits au moins deux corps (110) couplés fonctionnellement au moyen de l'agencement de couplage (130), dans des directions opposées autour de leur point de pivotement de corps (120) respectif lorsque l'objet (10) est soumis à une force dirigée dans le plan de rotation (P) ou parallèlement à celui-ci qui ne provoque pas d'accélération de rotation de l'objet (10).

**3.** Actionneur (100) selon la revendication 2, dans lequel lesdits au moins deux corps (110) couplés fonctionnellement au moyen dudit au moins un agencement de couplage (130) et ledit au moins un agencement de couplage (130) sont agencés pour désactiver un mouvement de rotation autour de chaque point de pivotement de corps (120) desdits corps (110) couplés fonctionnellement résultant d'une ou de plusieurs forces dirigées dans le plan de rotation (P) ou parallèlement à celui-ci qui ne provoquent pas d'accélération de rotation de l'objet (10).

**4.** Actionneur (100) selon l'une des revendications précédentes, comprenant un agencement de couplage (130) agencé pour coupler seulement deux desdits au moins deux corps (110) l'un à l'autre.

**5.** Actionneur (100) selon l'une des revendications précédentes, dans lequel l'actionneur (100) comprend en outre au moins un mécanisme de couplage (150) et l'actionneur (100) est en outre configuré pour, lors du passage à l'état activé, s'engager avec au moins un dudit ou desdits mécanismes de couplage (150).

**6.** Actionneur (100) selon la revendication 5, dans lequel au moins un dudit ou desdits mécanismes de couplage (150) est configuré pour s'engager directement ou indirectement avec l'objet (10) de sorte à changer une vitesse de rotation actuelle de l'objet (10).

**7.** Actionneur (100) selon l'une des revendications 5 à 6, dans lequel au moins un dudit ou desdits mécanismes de couplage (150) est un frein à friction.

**8.** Actionneur (100) selon l'une des revendications 5 à 7, dans lequel au moins un dudit ou desdits mécanismes de couplage (150) est un embrayage.

**9.** Actionneur (100) selon l'une des revendications 5 à 8, dans lequel au moins un dudit ou desdits mécanismes de couplage (150) est un mécanisme de couplage électronique.

**10.** Actionneur (100) selon l'une des revendications 5 à 9, dans lequel au moins un dudit ou desdits mécanismes de couplage (150) comprend une interface externe (155) pour activer l'actionneur (100) et/ou pour commander des dispositifs externes à l'actionneur (100) .

**11.** Actionneur (100) selon l'une des revendications 5 à 10, dans lequel l'actionneur (100) est configuré pour retarder l'engagement d'au moins un dudit ou desdits mécanismes de couplage (150) par un temps d'attente ($T_H$), dans lequel le temps d'attente ($T_H$) est déterminé par la quantité par laquelle l'accélération transversale dépasse un premier seuil pour l'activation de l'actionneur (100) et la distance que le corps (110) doit parcourir avant que ledit au moins un dudit ou desdits mécanismes de couplage (150) ne soit activé.

**12.** Actionneur (100) selon l'une des revendications précédentes, comprenant en outre au moins un agencement de sollicitation de rappel (160) agencé pour le passage de l'actionneur (100) de l'état activé lorsque l'accélération de rotation de l'objet (10) est en dessous d'un deuxième seuil prédéfini ou configurable.

**13.** Actionneur (100) selon la revendication 12, dans lequel ledit au moins un agencement de sollicitation de rappel (160) comprend au moins un élément de sollicitation (165) agencé pour rappeler l'actionneur (100) de l'état activé en agissant sur au moins un desdits corps (110) couplés fonctionnellement et/ou ledit au moins un agencement de couplage (130).

**14.** Actionneur (100) selon la revendication 12 ou 13, dans lequel le premier seuil prédéfini ou configurable et le deuxième seuil prédéfini ou configurable sont déterminés en partie par la configuration dudit au moins un agencement de sollicitation de rappel (160).

**15.** Actionneur (100) selon l'une des revendications précédentes, dans lequel le couplage fonctionnel desdits au moins deux corps (110) au moyen de l'agencement de couplage (130) se fait au moyen d'un couplage mécanique, de préférence, le couplage mécanique comprend un ou plusieurs éléments de transmission (131) et/ou un ou plusieurs éléments de couplage (133).

Fig. 1

Fig. 2a

Fig. 2b

Fig. 2c

Fig. 3

Fig. 4a

Fig. 4b

Fig. 5

Fig. 6a

Fig. 6b

Fig. 6c

Fig. 6d

Fig. 7

Fig. 8a

Fig. 8b

Fig. 8c

Fig. 8d

Fig. 9a

Fig. 9b

100

110

120

170 170

165 117

165a

160 167 165b

Fig. 9c

200

100 210

155

100

210 155 10

10 155 10 210

100 100

210 155

10

Fig. 11

100

110

130

12
132

131

120
135

110

10

Fig. 10

**EP 4 132 834 B1**

**REFERENCES CITED IN THE DESCRIPTION**

**Patent documents cited in the description**

- WO 2017140734 A

- WO 9708473 A